# EUROPÄISCHE PATENTSCHRIFT

(11) **EP 3 187 145 B1**
(45) Veröffentlichungstag und Bekanntmachung des Hinweises auf die Patenterteilung: **16.05.2018**
(21) Anmeldenummer: 16400063.0
(22) Anmeldetag: 28.12.2016
(51) Int. Cl.: A61C 8/00

(54) **DENTALIMPLANTAT**
DENTAL IMPLANT
IMPLANT DENTAIRE

(30) Priorität: 29.12.2015 DE 102015017001
(43) Veröffentlichungstag der Anmeldung: 05.07.2017
(73) Patentinhaber: Mitrovic, Milija, 18055 Rostock (DE)
(72) Erfinder: Hopp, Michael, 12209 Berlin (DE); Mitrovic, Milija, 18055 Rostock (DE)

(56) Entgegenhaltungen:
- EP-A1- 2 742 905
- EP-A1- 2 878 280
- DE-A1- 10 340 059
- DE-A1-102009 057 754

## Beschreibung

Die Erfindung betrifft ein Dentalimplantat aus einem keramischen, insbesondere einem oxidkeramischen Werkstoff auf der Basis von Zirkondioxid (ZrO₂) bzw. dessen Mischkeramiken, mit einem als in den Kieferknochen einschraubbar ausgebildeten Verankerungselement, einem Aufbauelement und mit einer in einer Innenbohrung geführten Kopfschraube, mittels derer das Aufbauelement am Verankerungselement fixierbar ist.

Ein derartiges Implantat, das aus der DE 103 40 059 A1 bekannt ist, weist ein als Grundkörper bezeichnetes Verankerungselement sowie ein an diesem mittels einer Kopfschraube befestigtes Aufbauelement auf, an dem seinerseits eine Aufbaukonstruktion fixiert wird. Dabei ist die Gefahr gegeben, dass es im Laufe der Zeit zu Lockerungserscheinungen der Konstruktion und damit unter Umständen auch zu einem Eindringen von Bakterien kommen kann.

Aufgabe der Erfindung ist es, den Sitz zweier in einem keramischen Dentalimplantat ineinander liegend angeordneter Teile, nämlich einem Verankerungselement oder Implantat und einem daran befestigten Aufbauelement oder Abutment so zu gestalten, dass dieser zuverlässig festsitzend gewährleistet ist.

Zur Lösung dieser Aufgabe wird erfindungsgemäß vorgeschlagen, dass miteinander korrespondierenden Flächen des Verankerungselementes und des Aufbauelementes als Pass- und Formschliff ausgeführt sind und dass zwischen den einander zugewandten Flächen des Passschliffes eine Pufferschicht aus einem silikatischen Glaslot vorgesehen ist, und dass die beiden den Pass- und Formschliff bildenden Elemente korrespondierende formkongruente Verbindungsflächen bilden.

Diese auch als Prothetikinterface bezeichnete Konstruktion kann dabei entweder beidseitig, d.h., auf dem Innen- und dem Außenformteil, oder aber nur auf einer Seite, d.h. entweder nur auf dem Innen- oder nur auf dem Außenformteil beschichtet sein, wobei aus bruchmechanischer Sicht das Innere des Implantates, also des Außenformteiles, vorzugsweise mit der Beschichtung versehen ist.

Insbesondere handelt es sich bei dem Aufbauelement gemäß dem Oberbegriff um ein Abutment, dessen Interface- oder Verankerungsstruktur mit einer Kopfschraube in einer metallenen Gewindehülse, die in der Regel im Inneren des Verankerungselementes angeordnet ist. Das so fixierte Verankerungselement nimmt am herausragenden Teil eine prothetische Suprakonstruktion auf. Dabei sind sowohl das Abutment als auch das in den Kiefer einzuschraubende Verankerungselement in vorteilhafter Weise aus einer Zirkoniumdioxidkeramik gefertigt, es ist aber im Rahmen der Erfindung auch möglich, dass einer oder beide Teile des Dentalimplantates aus einer Mischoxidkeramik oder einem anderen Werkstoff-bestehen.

Die beiden einander zugewandten Flächen des Verankerungselementes sowie des Abutments sind als, zumindest teilweise konisch ausgebildeter Pass- und Formschliff ausgeführt, wobei zwischen den Flächen des Passschliffes eine Pufferschicht vorgesehen ist, die sich bei möglichen Bewegungen aufgrund ihrer Beschaffenheit adaptiert. Während sich ein Teil des Passschliffes über die äußeren Teile der Innenflächen von Verankerungselement und Abutment hinaus erstrecken, umfasst der innere Teil des Passschliffes in erster Linie einen an das Abutment angeformten und konisch zulaufenden Teil, der auch als das Interface des Abutments bezeichnet wird und in dem sich die in der Gewindehülse im innen liegende Teilbereich des Verankerungselementes festzulegende Schraube befindet. Der Kopf dieser Schraube ist in seinem zur Anlage am Interface gelangenden Teilbereich vorzugsweise angeraut ausgebildet, um eine möglichst große Lösungssicherheit der Schraube sicherzustellen.

Ein Teil des Interfaces ist, ähnlich wie in der DE 20 2008 017 60 U1 beschrieben, als Konus gestaltet. Der Konuswinkel ά/2 beträgt vorzugsweise zwischen 1,5° bis 14°, abhängig von der Schraubenfixierung und der angestrebten Selbsthemmung des Konus. Selbstverständlich ist im Prinzip auch eine höhere Angulation möglich, wobei dann aber die Selbsthemmung des Konus schwächer ist. Zusätzlich können zur Ergänzung auch weitere rotationssichernde Strukturen, wie Sechs-, Acht-, Zwölfkanten oder andere geometrische Strukturen, die sich dann im Verankerungselement wiederfinden, vorgesehen sein. Diese zusätzlichen rotationssichernden Strukturen sind jedoch in der Regel nicht mit der Glaslotschicht überzogen.

Nachfolgend soll die Erfindung anhand eines in der Zeichnung dargestellten Ausführungsbeispieles näher erläutert werden. Es zeigen:
- Fig. 1: einen Schnitt durch den Interfacebereich eines Dentalimplantates,
- Fig. 2: den in Fig. 1 dargestellten Teilbereich des Implantates im Hinblick auf einen in Fig. 3 gezeigten Ausschnitt und
- Fig. 3 a - e: den in Fig. 2 angedeuteten Ausschnitt mit verschiedenen Detaildarstellungen des Pass- und Formschliffes sowie mit einer zwischen den Komponenten befindlichen Pufferschicht.

In den Figuren sind jeweils gleiche Bauteile mit den gleichen Bezugszeichen versehen.

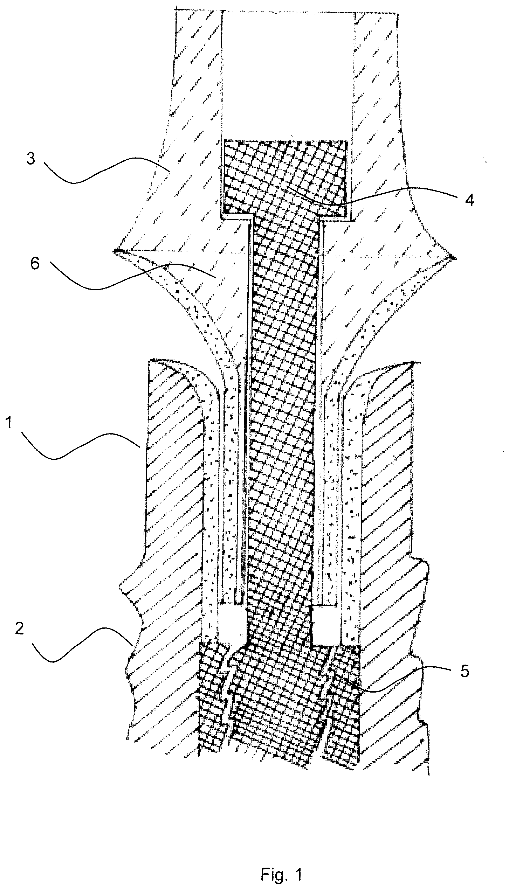

Bei der in Fig. 1 dargestellten Anordnung handelt es sich um einen Längsschnitt durch den Schulterbereich eines Dentalimplantates, bestehend aus einem mit einem Außengewinde 2 versehenen Verankerungselement 1 aus einem oxidkeramischen Keramikwerkstoff, im vorliegenden Fall einer Zirkondioxidkeramik (ZrO₂), sowie einem Aufbauelement oder Abutment 3. Letzteres ist über eine metallische Schraube 4 sowie über eine vorzugsweise aus dem gleichen Metall bzw. der gleichen Metalllegierung bestehende Gewindehülse 5 im Verankerungselement 1 gehalte, wobei diese Halterung in den folgenden Figuren nicht dargestellt ist. Die Schraube 4 und die Gewindehülse 5 bestehen im vorliegenden Fall aus der Titanlegierung Ti6Al4V, sie können aber auch beispielsweise aus Reintitan bestehen.

Der dem Verankerungselement 1 zugewandte Endbereich des Abutments 3 , d.h. der Interfacebereich, ist als einstückig angeformter, ebenso wie das Abutment 3 aus Zirkondioxid bestehender Hals 6 ausgebildet, der in seinem dem Abutment 3 abgewandten Endbereich einen geringeren Querschnitt als in seinem Übergangsbereich zum Abutment 3 aufweist und der durch die Kopfschraube 4 gehalten wird. Der Kopf dieser Schraube 4 ist in seinem zur Anlage am Interface gelangenden Teilbereich angeraut ausgebildet, um eine große Lösungssicherheit der Schraube 4 zu gewährleisten.

Der aus dem einseitig offenen Verankerungselement 1 , d.h. dem Implantat, herausragende Teil des Abutments 3 ist als prothetische Suprakonstruktion ausgelegt, auf dem abschließend eine Krone, ein herausnehmbarer Zahnersatz oder anderes, wie : beispielsweise Ketten, Züge, Bögen usw. für die Kieferorthopädie, Funktionsgeräte, wie Speichelflusssensoren und -signalgeber usw. aufgesetzt oder befestigt werden.

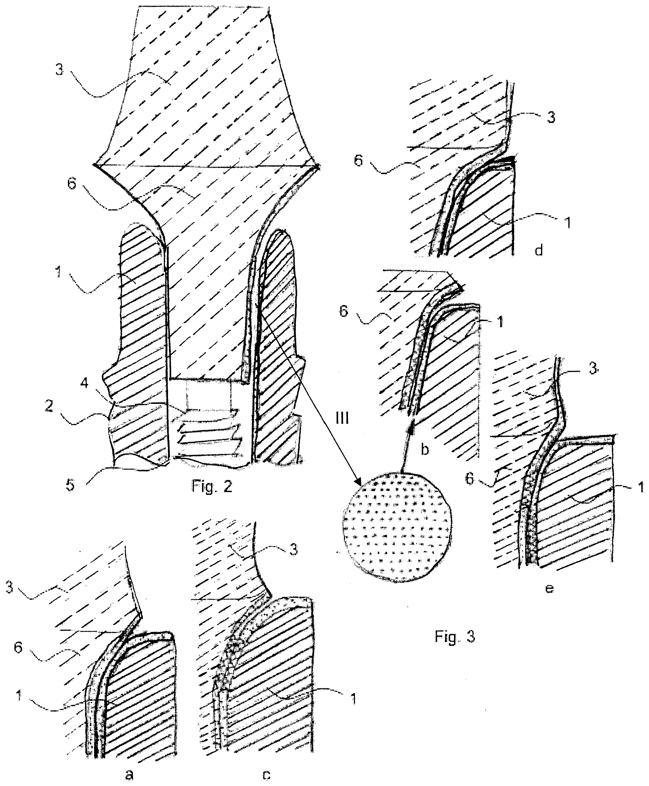

Der Hals 6 des Abutments 3 sowie der dem offenen Endbereich zugewandte innere Teil des Verankerungselementes 1 bilden, wie nochmals in der allgemeinen Darstellung in Fig. 2 gezeigt ist, einen Pass- und Formschliff nach der Art eines Schliffstopfendesigns, beispielsweise dem Verschluss einer Karaffe oder einer Chemikalienflasche ähnlich, wobei der Hals 6 hier die Funktion eines Passstopfens übernimmt. Zumindest eine, vorzugsweise beide Schichten des Passschliffes sind mit einem silikatischen Glaslot beschichtet. Dieser Bereich des Passschliffes und der Beschichtung mit Gaslot erstreckt sich in die Tiefe des Verankerungselementes 1. In den Figuren 3a bis e sind verschiedene Arten der Ausführungen dieser Verbindung, d.h., eines Pass- und Formschliffes mit einer dazwischen liegend angeordneten Pufferschicht aus einem silikatischen Glaslot beschichtet, dargestellt.

Wie zunächst alle Abbildungen der Fig. 3 zeigen, sind ein Teil des inneren Bereiches des Verankerungselementes 1 und des äußeren Bereiches des Halses 6 konisch geformt und derart aufeinander abgestimmt, dass sie gemeinsam einen Pass- und Formschliff bilden. Auf zumindest einen, vorzugsweise aber auf die beiden Teilbereiche dieses Passschliffes ist eine Schicht aus einem silikatischen Glaslot aufgetragen. Der Auftrag erfolgt dabei beispielsweise im Printverfahren mit einem 3-D-Drucker oder mittels eines Airbrush-Verfahrens, um die Gleichmäßigkeit der aufgetragenen Schicht zu gewährleisten. Das Einbrennen der Schicht erfolgt bei 700 - 1200 °C in einem Keramikofen, abhängig vom verwendeten Glaslot. Anschließend wird diese Schicht mittels Formschleifen, Strahlen, Ätzen oder aber mit einem Laser so weit abtragend bearbeitet, dass es zu einer definierten Form und Oberflächenstruktur geringer Rauigkeit der beiden Glasschichten miteinander kommt und die Kontaktschichten dadurch gleichsam neue Eigenschaften erlangen. So verkeilt sich die auf diese Weise entstandene Pufferschicht bei jeder Bewegung aufgrund ihrer speziellen Beschaffenheit und ihrer minimalen Oberflächenrauigkeit weiter und wird dichtend adaptiert, was eine bakterienhemmende Wirkung in die Tiefe der Verschraubung und des Interfaces zur Folge hat. Durch das kraft- und formschlüssige Verschrauben des Implantates mit dem Abutment auftretende punktuelle Spannungen in der glasigen Kontaktschicht des Interfaces werden durch die auf die beiden oder eine Keramikflächen von Implantat und Abutment des Passschliffes teilweise eindiffundierte silikatische Glaslotbeschichtung in Abhängigkeit von deren Oberflächenrauigkeit weitgehend absorbiert; entstehende Risspforten sowohl in der Schicht selbst als auch im Verankerungskörper, dem Implatat, werden minimiert.

Die Abbildungen a bis e der Fig. 3 zeigen verschiedene Anordnungen dieser Pufferschicht ohne und mit einer Laserbearbeitung, die lokal eine Oberfläche erzeugt, wie sie in der Draufsicht in Fig. 3 dargestellt ist. Die in Fig. 3a gezeigte Pufferschicht ist dabei ohne jede Form von Laserbehandlung entstanden und entspricht damit der Pufferschicht, wie sie in Fig. 2 dargestellt ist. Bei der Pufferschicht gemäß Fig. 3b ist demgegenüber das auf den Hals 6 aufgetragene Glaslot, bei den Pufferschichten gemäß Fig. 3c und d sind beide Seiten des Glaslotes im jeweils gleichen Bereich definiert aufrauend bearbeitet. Schließlich ist in Fig. 3e eine Anordnung dargestellt, in der sich auf Bereichen des Halses 6 einerseits und des Verankerungselementes 1 andererseits jeweils Glaslotbeschichtungen befinden. Vorteil der erweiterten Beschichtung auf die Retentionsstruktur des Abutments ist die Nutzung der Schicht als Klebegrundlage zur adhäsiven Verankerung einer Krone oder Brücke, wodurch die Oberflächenvorbereitung für adhäsive Verbünde auf oxidkeramischen Werkstoffen, in erster Linie Zirkondioxid, ermöglicht wird.

## Patentansprüche

1. Dentalimplantat aus einem keramischen, insbesondere einem oxidkeramischen Werkstoff auf der Basis von Zirkondioxid (ZrO₂) bzw. dessen Mischkeramiken, mit einem als in den Kieferknochen einschraubbar ausgebildeten Verankerungselement (1), einem Aufbauelement (6) und mit einer in einer Innenbohrung geführten Kopfschraube (4), mittels derer das Aufbauelement (6) am Verankerungselement (1) fixierbar ist, wobei miteinander korrespondierenden Flächen (1, 6) des Verankerungselementes (1) und des Aufbauelementes (6) als Pass- und Formschliff ausgeführt sind, und dass die beiden den Pass- und Formschliff bildenden Elemente (1, 6) korrespondierende formkongruente Verbindungsflächen bilden, **dadurch gekennzeichnet, dass** zwischen den einander zugewandten Flächen des Passschliffes eine Pufferschicht aus einem silikatischen Glaslot vorgesehen ist.

2. Dentalimplantat gemäß Anspruch 1, **dadurch gekennzeichnet, dass** zumindest eines der beiden den Pass- und Formschliff bildenden Elemente (1, 6) aus Zirkoniumdioxid (ZrO₂) bzw. dessen Mischkeramiken besteht.

3. Dentalimplantat gemäß Anspruch 1, **dadurch gekennzeichnet, dass** die beiden den Pass- und Formschliff bildenden Elemente (1, 6) aus Zirkoniumdioxid (ZrO₂) bestehen.

4. Dentalimplantat gemäß einem der Ansprüche 1 bis 3, **dadurch gekennzeichnet, dass** eines der Elemente als Abutment (3) mit einem angeformten Hals (6) ausgebildet ist, wobei der Hals (6) zugleich die eine Fläche des Passschliffes bildet.

5. Dentalimplantat gemäß einem der Ansprüche 1 bis 4, **dadurch gekennzeichnet, dass** das Verankerungselement (1) mit einem Außengewinde (2) in den Kiefer eingeschraubt ist.

6. Dentalimplantat gemäß einem der Ansprüche 1 bis 6, **dadurch gekennzeichnet, dass** das silikatische Glaslot mit einem 3-D-Drucker bzw. mit einem anderen CAD/CAM gestützten Verfahren auf zumindest eine der Flächen des Passschliffes aufgetragen ist.

7. Dentalimplantat gemäß einem der Ansprüche 1 bis 6, **dadurch gekennzeichnet, dass** das silikatische Glaslot mittels Airbrush-Technik auf zumindest einen Teil einer der Flächen des Passschliffes aufgetragen ist.

8. Dentalimplantat gemäß einem der Ansprüche 1 bis 7 **dadurch gekennzeichnet, dass** die silikatische Glaslotschicht anschließend durch einen keramischen Brand verfestigt und mittels eines Feinstrukturierungsverfahrens aufgeraut ist.

9. Dentalimplantat gemäß einem der Ansprüche 1 bis 8, **dadurch gekennzeichnet, dass** sich die zwischen den beiden den Pass- und Formschliff bildenden Elementen (1, 6) befindliche Pufferschicht bei einer Bewegung dieser Elemente (1, 6) zueinander verkeilt und dichtend adaptiert.

## Claims

1. A dental implant made of a ceramic, in particular an oxide ceramic material, based on zirconium dioxide (ZrO₂) and/or mixed ceramics thereof, with an anchoring element (1), designed to be screwed into the jawbone, and with an add-on element (6) with a head screw (4) guided in an inside borehole, by means of which the add-on element (6) can be affixed on the anchoring element (1), wherein corresponding surfaces (1, 6) of the anchoring element (1) and of the add-on element (6) are embodied as fitting grinding and form grinding shapes, and the two elements (1, 6) forming the fitting grinding and form grinding shapes form corresponding dimensionally congruent connecting surfaces,
**characterized in that**
a buffer layer of a silicatic glass solder is provided between the facing surfaces of the fitting grinding shape.

2. The dental implant according to claim 1,
**characterized in that**
at least one of the two elements (1, 6) forming the fitting grinding and form grinding shapes consist of zirconium dioxide (ZrO₂) and/or mixed ceramics thereof.

3. The dental implant according to claim 1,
**characterized in that**
the two elements (1, 6) forming the fitting grinding and form grinding shapes are each made of zirconium dioxide (ZrO₂) .

4. The dental implant according to any one of claims 1 to 3,
**characterized in that**
one of the elements is embodied as an abutment (3) with an integrally molded neck (6), wherein the neck (6) forms a surface of the fitting grinding shape at the same time.

5. The dental implant according to any one of claims 1 to 4,
**characterized in that**
anchoring element (1) is screwed into the jawbone with an outside thread (2).

6. The dental implant according to any one of claims 1 to 5,
**characterized in that**
the silicatic glass solder is applied to at least one of the surfaces of the fitting grinding shape using a 3D printer and/or some other CAD/CAM-assisted method.

7. The dental implant according to any one of claims 1 to 6,
**characterized in that**
the silicatic glass solder is applied to at least one part of one of the surfaces of the fitting grinding shape by means of an airbrush technique.

8. The dental implant according to any one of claims 1 to 7,
**characterized in that**
the silicatic glass solder layer is then solidified by a ceramic firing and then roughened by means a fine structuring method.

9. The dental implant according to any one of claims 1 to 8,
**characterized in that**
the buffer layer between the two elements (1, 6) forming the fitting grinding shape and the form grinding shape are wedged together and adapted with a seal when there is movement of these elements (1, 6).

## Revendications

1. Implant dentaire en une matière céramique, notamment oxydocéramique sur la base de dioxyde de zirconium (ZᵣO₂) ou de ses céramiques mixtes, avec un élément d'ancrage (1) conçu sous la forme susceptible d'être vissée dans l'os de la mâchoire, un élément structurel (6) et avec une vis à tête (4) guidée dans un alésage intérieur, à l'aide de laquelle l'élément structurel (6) peut être fixé sur l'élément d'ancrage (1), des surfaces (1, 6) réciproquement correspondantes de l'élément d'ancrage (1) et de l'élément structurel (6) étant conçues sous la forme de rectification ajustée et façonnée et les deux éléments (1, 6) formant la rectification ajustée et façonnée formant des surfaces d'assemblage correspondantes, de forme congruente, **caractérisé en ce qu'**entre les surfaces dirigées l'une vers l'autre de la rectification ajustée, il est prévu une couche tampon en une brasure de verre silicatée.

2. Implant dentaire selon la revendication 1, **caractérisé en ce qu'**au moins l'un des deux éléments (1, 6) formant la rectification ajustée et façonnée est constitué de dioxyde de zirconium (ZᵣO₂) ou de ses céramiques mixtes.

3. Implant dentaire selon la revendication 1, **caractérisé en ce que** les deux éléments (1, 6) formant la rectification ajustée et façonnée sont constitués de dioxyde de zirconium (ZrO₂) ou de ses céramiques mixtes.

4. Implant dentaire selon l'une quelconque des revendications 1 à 3, **caractérisé en ce que** l'un des éléments est conçu sous la forme d'un pilier (3) avec un col (6) moulé, le col (6) formant simultanément l'une des surfaces de la rectification ajustée.

5. Implant dentaire selon l'une quelconque des revendications 1 à 4, **caractérisé en ce que** l'élément d'ancrage (1) est vissé dans la mâchoire par un filetage (2).

6. Implant dentaire selon l'une quelconque des revendications 1 à 6, **caractérisé en ce que** la brasure de verre silicatée est appliquée à l'aide d'une imprimante 3D ou d'un autre procédé assisté CAO/FAO sur au moins l'une des surfaces de la rectification ajustée.

7. Implant dentaire selon l'une quelconque des revendications 1 à 6, **caractérisé en ce que** la brasure de verre silicatée est appliquée par technique d'aérographe sur au moins une partie des surfaces de la rectification ajustée.

8. Implant dentaire selon l'une quelconque des revendications 1 à 7, **caractérisé en ce que** la brasure de verre silicatée est ensuite solidifiée par une cuisson céramique et grainée à l'aide d'un procédé de structuration fine.

9. Implant dentaire selon l'une quelconque des revendications 1 à 8, **caractérisé en ce que** la couche tampon se trouvant entre les deux éléments (1, 6) formant la rectification ajustée et façonnée se coince lors d'un déplacement desdits éléments (1, 6) l'un vers l'autre et s'adapte de manière à assurer l'étanchéité.
